# EUROPEAN PATENT SPECIFICATION

(11) **EP 2 579 131 B1**
(45) Date of publication and mention of the grant of the patent: **17.03.2021**
(21) Application number: 12183272.9
(22) Date of filing: 06.09.2012
(51) Int. Cl.: G06F 3/0354, H01H 13/78, H01H 13/83

(54) **Key input apparatus and portable terminal**
Tasteneingabevorrichtung und tragbares Endgerät
Appareil d'entrée à touches et terminal portable

(30) Priority: 07.10.2011 KR 20110102445
(43) Date of publication of application: 10.04.2013
(73) Proprietor: Samsung Electronics Co., Ltd., Suwon-si, Gyeonggi-do, 443-742 (KR)
(72) Inventor: Kim, Hyung-Gon, Daegu (KR)
(74) Representative: HGF

(56) References cited:
- JP-A- 2002 215 331
- KR-A- 20110 053 676
- US-A1- 2003 058 225
- US-A1- 2007 019 942
- US-A1- 2011 186 414

## Description

### TECHNICAL FIELD OF THE INVENTION

The present invention relates to a key input apparatus and a portable terminal having a key input apparatus.

### BACKGROUND OF THE INVENTION

With the development of electronics communication industries in recent years, an electronic apparatus such as a mobile communication terminal (or a cellular phone), an electronics organizer, a Personal Digital Assistant (PDA), etc., has become a necessity of modern life as an important means for delivering information which changes rapidly.

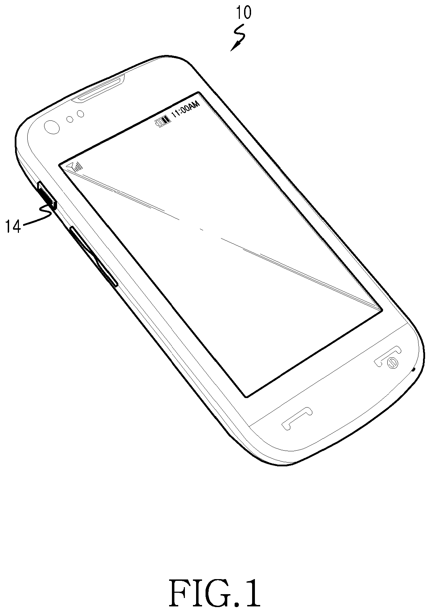

FIG. 1 is a perspective view of a typical touch screen portable terminal. The touch screen portable terminal 10 includes a power key 14 and a volume control key (not identified in Figure 1) on a lateral portion. However, these keys may be damaged by an external factor such as sweat and moisture and may be against the recent design trend.

US 2007/019942 describes a display device having a switch positioned adjacent to an inner surface of the electroluminescent display, the switch being activated upon an outer surface of the display being pressed to resiliently deform the switch.

JP 2002 215331 discloses a touch panel having a pair of transparent glass substrates.

KR 2011 0053676 discloses a touch key having a dome switch.

US 2011/0186414 discloses a dome switch integrated touch window for a mobile terminal.

### SUMMARY OF THE INVENTION

It is an aim of embodiments of the present invention to address at least one of the above-discussed deficiencies of the prior art. It is an aim of embodiments of the present invention to provide a key input apparatus capable of replacing an exterior key of a portable terminal.

Another aim of embodiments of the present invention is to provide a key input apparatus capable of turning on or off the power of a portable terminal when a proper position on a screen is pressed.

In accordance with a first aspect of the present invention there is provided a key input apparatus according to claim 1.

In one embodiment there is provided a portable terminal according to claim 6 having a key input apparatus according to any of claims 1 to 5.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a perspective view of a typical touch screen portable terminal;
FIG. 2 is a perspective view of a touch screen portable terminal according to one embodiment of the present disclosure;
FIG. 3 illustrates cross section views of a key input apparatus before and after pressing the key input according to one embodiment of the present disclosure;
FIG. 4 illustrates cross section views of a key input apparatus before and after pressing the key input according to one embodiment of the present invention; and
FIG. 5 illustrates screens before and after touching a key input apparatus according to one embodiment of the present invention.

### DETAILED DESCRIPTION OF THE INVENTION

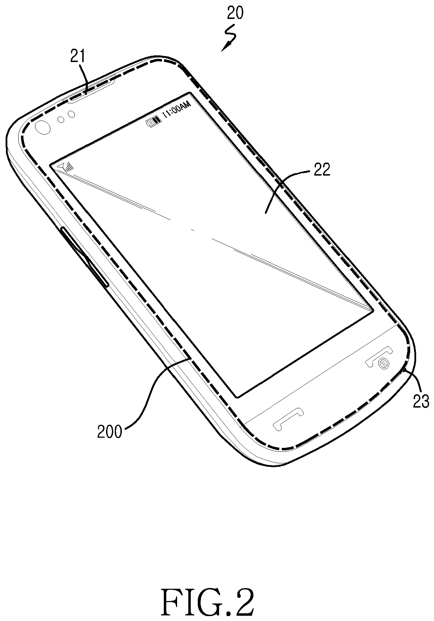

FIGURES 2 through 5, discussed below, and the various embodiments used to describe the principles of the present disclosure in this patent document, are by way of illustration only and should not be construed in any way to limit the scope of the disclosure. Those skilled in the art will understand that the principles of the present disclosure may be implemented in any suitably arranged wireless communications device. Exemplary embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intension and usage. That is, the terms used herein must be understood based on the descriptions made herein.

The present invention relates to a key input apparatus capable of replacing the exterior keys of a portable terminal. The key input apparatus according to one embodiment of the present disclosure is a key input apparatus capable of turning on or off the power of a portable terminal when a proper position of a screen is pressed.

FIG. 2 is a perspective view of a touch screen portable terminal according to one embodiment of the present disclosure.

A portable terminal 20 includes a speaker 21 for outputting electrical signal into audio signal, a touch screen 22 for outputting electrical signal into video signal and for receiving electrical signal based on a touch, and a microphone 23 for converting audio signal into electrical signal.

The touch screen portable terminal 20 incorporates a power key which can turn on or off power into a front portion 200 of the portable terminal 20. In particular, the touch screen 22 can have flexibility and elasticity, and the power key can be placed below the touch screen 22. In certain embodiments, when a user presses a proper position of the touch screen 22, the power key is pressed.

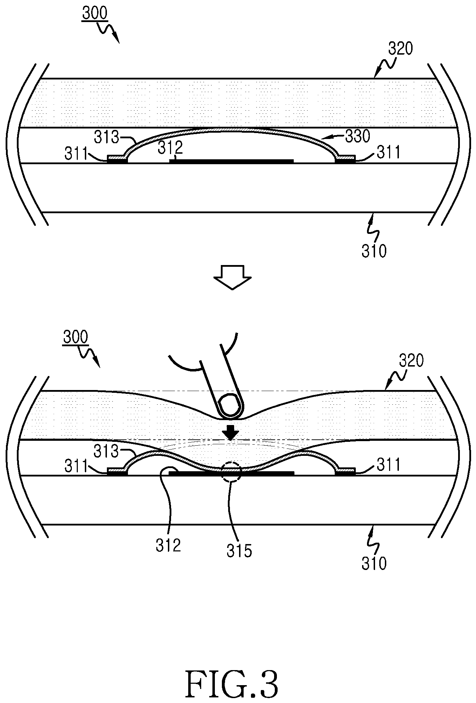

FIG. 3 illustrates cross section views of a key input apparatus according to an exemplary embodiment of the present disclosure. A key input apparatus 300 of the present disclosure includes a main board 310, a touch screen 320 supported above the main board 310 and a press switch 330 which can be placed between the main board 310 and the touch screen 320. It will be understood that the main board 310 may be directly coupled to the touch screen 320, for instance supporting the touch screen 320 about a peripheral portion. The press switch 330 is disposed in a portion of the portable terminal 20 at which the main board 310 and the touch screen 320 are spaced apart.

The main board 310 comprises a board containing a circuit and components on the circuit. The main board 310 configures an execution environment of a terminal and maintains information thereof, allows the terminal to operate reliably, and facilitates data input/output exchange of all elements of the terminal. Components placed on the main board 310 can include a Central Processing Unit (CPU), a microprocessor, a co-processor, a memory, a BIOS, a connection circuit, and the like.

The touch screen 320 includes a display and a touch panel attached on the display, and the shape of the touch screen can be modified. In certain embodiment, the display and the touch panel can be formed with a material having flexibility, thus the display and the touch panel can have flexibility and elasticity.

The press switch 330 includes first and second conductive pads 311 and 312 placed on the main board 310 and a conductive elastic dome 313 which is in contact with the first pad 311 and has an uplifted upper portion extending over the second pad 312 such that it is normally spaced apart from the second pad 312. Further, the press switch 330 can have a film (not illustrated) for isolating the elastic dome 313 from the touch screen 320.

Since the touch screen 320 has flexibility and / or elasticity, a user can depress the conductive elastic dome 313 when the user presses a proper position of the touch screen 320. In this case, the lifted upper portion of the conductive elastic dome 313 is brought into contact with the second pad 312, the first pad 311 and the second pad 312 are electrically connected, and the main board 310 detects that the switch is on. The elastic dome 313 may be resilient such that in the absence of a user pressing the touch screen 320 it rebounds from the second pad 312. Alternatively the elastic dome 313 may be attached to the touch screen 320 such that when the press is removed the elastic dome 313 is moved upwards with the touch screen 320 away from the second pad 312.

When the press on the touch screen is released, the touch screen 320 and the conductive elastic dome 313 are restored, the first pad 311 and the second pad 312 are electrically disconnected, and the main board 310 detects that the switch is off.

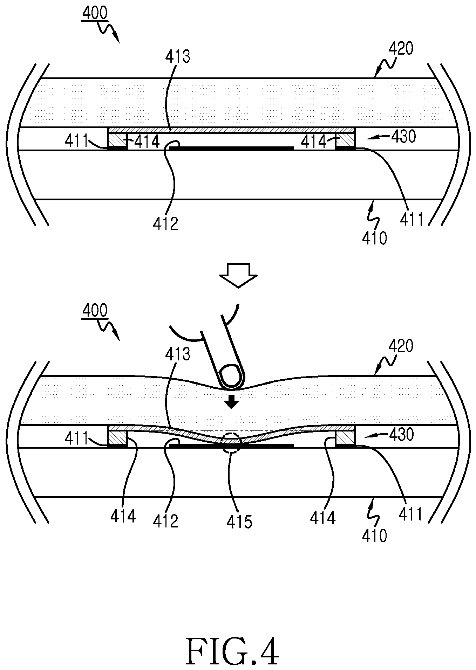

FIG. 4 illustrates cross section views of a key input apparatus before and after pressing the key input according to one embodiment of the present invention.

A key input apparatus 400 of the present disclosure includes a main board 410, a touch screen 420 laminated on the main board 410 and a press switch (430) placed between the main board 410 and the touch screen 420.

The touch screen 420 includes a display and a touch panel attached on the display, and can modify these elements. In certain embodiments, the display and the touch panel can have flexibility and elasticity.

The press switch 430 includes first and second conductive pads 411 and 412 placed on the main board 410 and a conductive film 413 having flexibility and placed below the touch screen 420 in such a manner that the conductive film is in contact with the first pad 411 and is spaced apart from the second pad (412). The switch 430 includes a member 414 for electrically connecting the first pad 411 and the conductive film 413. Further, the press switch 430 can have a film (not illustrated) for isolating the elastic dome 413 from the touch screen 420. The conductive film 413 can be an Indium Tin Oxide (ITO) film, a carbon nano-tube film, a graphene film, a gold film, a silver film, and the like.

Since the touch screen 420 has flexibility, when a user presses a proper position of the touch screen 420, the conductive elastic film 413 which is stretched together with the touch screen 420 is brought into contact with the second pad 412, the first pad 411 and the second pad 412 are electrically connected, and the main board 410 detects that the press switch 430 is closed.

When the pressing is released, the touch screen 420 and the conductive elastic film 413 are restored, the first pad 411 and the second pad 412 are electrically disconnected, and the main board 410 detects that the press switch 430 is open.

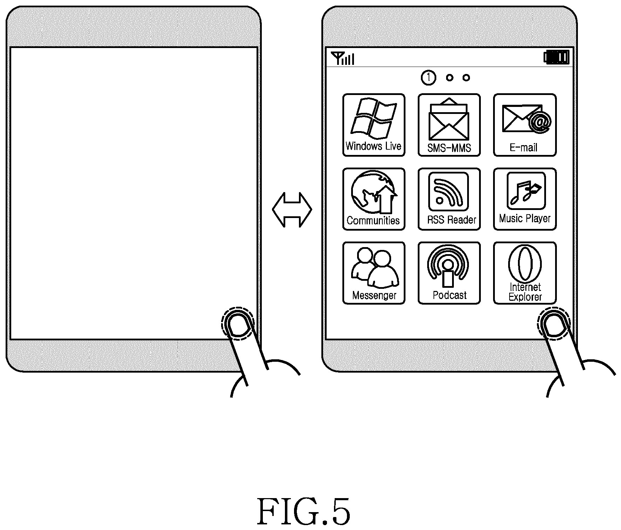

FIG. 5 illustrates changes on a screen before and after pressing a key input apparatus according to one embodiment of the present disclosure.

A user presses a proper position of a touch screen when power of a portable terminal is turned on or off. The position to be pressed can be indicated by a character, a symbol, a color, and the like.

In an example not covered by the claimed invention, the disclosure is not limited to the touch screen portable terminal, and can also apply to a typical display portable terminal. In certain examples not covered by the claimed invention, in order to implement the key input apparatus of the present disclosure, the display portable terminal includes a display having flexibility. Such a structure allows a user to experience an input generated by a touch of the display portable terminal.

In conclusion, a key input apparatus of a portable terminal of the present invention can not only beautify the terminal but also protect the terminal from an outer damage factor.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present invention has been particularly shown and described with reference to exemplary embodiments thereof, it will be understood by those skilled in the art that various changes in form and details may be made therein. The scope of the present invention is defined by the appended claims.

## Claims

1. A key input apparatus (400) comprising:
a main board (410);
a touch screen (420) having a display and a touch panel attached to the display, wherein the display and touch panel have flexibility and elasticity; and
at least one press switch (430) placed between the main board and the touch screen (420);
wherein the press switch comprises:
first and second conductive pads (411, 412) placed on the main board (410) and spaced apart from each other;
a conductive film (413) having flexibility and placed below the touch screen (420), wherein the conductive film (413) is spaced apart from the second conductive pad (412);
**characterized in that** the apparatus further comprises a member (414) placed between the first conductive pad (411) and the conductive film (413), for electrically connecting the first conductive pad (411) and the conductive film (413),
wherein upon pressing the touch screen (420), the conductive film (413) which is stretched together with the touch screen (420) is brought into contact with the second conductive pad (412), and the second conductive pad (412) is electrically connected with the first conductive pad (411) via the conductive film (413) and the member (414).

2. The apparatus of claim 1, wherein the conductive film (413) is one of an Indium Tin Oxide, ITO, film, a carbon nano-tube film, a graphene film, a gold film and a silver film.

3. The apparatus of any preceding claim, further comprising a film, placed between the touch screen (420) and the switch (430), for isolating the display from the switch.

4. The apparatus of any preceding claim, wherein if the press switch (430) connects an electrical path, the main board either turns on or turns off power of the portable terminal.

5. The apparatus of any preceding claim, wherein the display provides an indication of the location of the press switch (430).

6. A portable terminal comprising a key input apparatus based on any one of claims 1 to 5.

## Patentansprüche

1. Schlüsseleingabevorrichtung (400), umfassend:
eine Hauptplatte (410);
einen Touchscreen (420), der eine Anzeige und ein an der Anzeige angebrachtes Touchpanel aufweist, wobei die Anzeige und das Touchpanel Flexibilität und Elastizität aufweisen; und
zumindest einen Druckschalter (430), der zwischen der Hauptplatte und dem Touchscreen (420) platziert ist;
wobei der Druckschalter Folgendes umfasst:
ein erstes und ein zweites leitendes Pad (411, 412), die auf der Hauptplatte (410) platziert und voneinander beabstandet sind;
einen leitenden Film (413), der Flexibilität aufweist und unter dem Touchscreen (420) platziert ist, wobei der leitende Film (413) von dem zweiten leitenden Pad (412) beabstandet ist;
**dadurch gekennzeichnet, dass** die Vorrichtung ferner ein Element (414) umfasst, das zwischen dem ersten leitenden Pad (411) und dem leitenden Film (413) platziert ist, um das erste leitende Pad (411) und den leitenden Film (413) elektrisch zu verbinden;
wobei beim Drücken des Touchscreens (420) der leitende Film (413), der zusammen mit dem Touchscreen (420) gedehnt wird, mit dem zweiten leitenden Pad (412) in Kontakt gebracht wird und das zweite leitende Pad (412) über den leitenden Film (413) und das Element (414) mit dem ersten leitenden Pad (411) elektrisch verbunden wird.

2. Vorrichtung nach Anspruch 1, wobei der leitende Film (413) einer von einem Indiumzinnoxid-Film, ITO-Film, einem Kohlenstoff-Nanoröhrchenfilm, einem Graphenfilm, einem Goldfilm und einem Silberfilm ist.

3. Vorrichtung nach einem vorhergehenden Anspruch, ferner umfassend einen Film, der zwischen dem Touchscreen (420) und dem Schalter (430) platziert ist, um die Anzeige von dem Schalter zu isolieren.

4. Vorrichtung nach einem vorhergehenden Anspruch, wobei, wenn der Druckschalter (430) einen elektrischen Pfad verbindet, die Hauptplatte die Stromversorgung des tragbaren Endgerät entweder einschaltet oder ausschaltet.

5. Vorrichtung nach einem vorhergehenden Anspruch, wobei die Anzeige eine Angabe der Position des Druckschalters (430) bereitstellt.

6. Tragbares Endgerät, das eine Schlüsseleingabevorrichtung basierend auf einem der Ansprüche 1 bis 5 umfasst.

## Revendications

1. Appareil d'entrée de touche (400) comprenant :
une carte mère (410),
un écran tactile (420) ayant un affichage et un panneau tactile attaché à l'affichage, dans lequel l'affichage et le panneau tactile ont une flexibilité et une élasticité ; et
au moins un interrupteur à pression (430) placé entre la carte mère et l'écran tactile (420) ;
dans lequel l'interrupteur à pression comprend :
des premier et second plots conducteurs (411, 412) placés sur la carte mère (410) et espacés l'un de l'autre ;
un film conducteur (413) ayant une flexibilité et placé sous l'écran tactile (420), dans lequel le film conducteur (413) est espacé du deuxième plot conducteur (412) ;
**caractérisé en ce que** l'appareil comprend en outre un élément (414) placé entre le premier plot conducteur (411) et le film conducteur (413), pour connecter électriquement le premier plot conducteur (411) et le film conducteur (413),
dans lequel, lors de la pression de l'écran tactile (420), le film conducteur (413) qui est étiré conjointement à l'écran tactile (420) est amené en contact avec le second plot conducteur (412), et le second plot conducteur (412) est électriquement connecté au premier plot conducteur (411) via le film conducteur (413) et l'élément (414).

2. Appareil selon la revendication 1, dans lequel le film conducteur (413) est l'un parmi un film d'oxyde d'indium et d'étain, ITO, un film de nanotubes de carbone, un film de graphène, un film d'or et un film d'argent.

3. Appareil selon l'une quelconque des revendications précédentes, comprenant en outre un film, placé entre l'écran tactile (420) et l'interrupteur (430), pour isoler l'affichage de l'interrupteur.

4. Appareil selon l'une quelconque des revendications précédentes, dans lequel si l'interrupteur à pression (430) connecte un chemin électrique, la carte mère allume ou coupe l'alimentation du terminal portable.

5. Appareil selon l'une quelconque des revendications précédentes, dans lequel l'affichage fournit une indication de l'emplacement de l'interrupteur à pression (430).

6. Terminal portable comprenant un appareil d'entrée de touche basé sur l'une quelconque des revendications 1 à 5.
